# FASCICULE DE BREVET EUROPEEN

(11) **EP 3 688 375 B1**
(45) Date de publication et mention de la délivrance du brevet: **03.12.2025**
(21) Numéro de dépôt: 18789327.6
(22) Date de dépôt: 28.09.2018
(51) Int. Cl.: F24C 15/14, F24C 15/10, C03C 17/30

(54) **PLAQUE VITROCÉRAMIQUE COMPRENANT UN CORDON DE RÉTENTION DES LIQUIDES ET PROCÉDÉ DE FABRICATION D'UNE TELLE PLAQUE**
GLASKERAMIKPLATTE MIT EINEM FLÜSSIGKEITSRÜCKHALTEWULST UND VERFAHREN ZUR HERSTELLUNG EINER SOLCHEN PLATTE
GLASS-CERAMIC PLATE COMPRISING A LIQUID-RETAINING BEAD AND METHOD OF MANUFACTURING SUCH A PLATE

(30) Priorité: 29.09.2017 FR 1759082
(43) Date de publication de la demande: 05.08.2020
(73) Titulaire: Eurokera S.N.C., 02400 Château-Thierry (FR)
(72) Inventeur: BRUDIEU, Barbara, 75014 Paris (FR); GUEDON, Thibault, 75010 Paris (FR)
(74) Mandataire: Saint-Gobain Recherche
(86) Numéro de dépôt international: PCT/EP2018/076524
(87) Numéro de publication internationale: WO 2019/063821

(56) Documents cités:
- WO-A1-2011/056742
- WO-A1-2011/056742
- US-A1- 2010 102 693
- US-A1- 2010 102 693
- SANGWHA LEE: "The Wettability of Fluoropolymer Surfaces: Influence of Surface Dipoles", LANGMUIR JOURNAL, vol. 24, no. 9, 2008, 9 January 2008 (2008-01-09), pages 4817 - 4826, Retrieved from the Internet <URL:http://lee.chem.uh.edu/2008/2008%20-%20Langmuir%202008,%2024,%204817.pdf> [retrieved on 20241126]

## Description

La présente invention concerne une plaque vitrocéramique pour dispositif de cuisson comprenant un cordon de rétention des liquides. Lorsque la plaque vitrocéramique est utilisée dans un dispositif de cuisson, le cordon de rétention permet de retenir les liquides susceptibles de déborder des récipients ou ustensiles de cuisson sur la surface de la plaque.

Les plaques vitrocéramiques sont aujourd'hui très utilisées comme surfaces de cuisson dans de nombreux dispositifs de cuisson. Elles sont des matériaux inorganiques, le plus souvent à base de silicates ou d'aluminosilicates. Leurs principaux avantages sont la planéité de leur surface, leur faible coefficient de dilatation et leur résistance aux chocs thermiques.

Lors de la cuisson de produits alimentaires sur une plaque vitrocéramique, il arrive que des liquides alimentaires débordent des ustensiles ou récipients de cuisine et se répandent rapidement sur l'ensemble de la surface de la plaque en raison de sa grande planéité. Pour des raisons de sécurité des personnes et de détérioration de l'environnement dans lequel est utilisé le dispositif de cuisson, il est préférable que ces écoulements inopinés soient retenus sur la plaque avant qu'ils ne se déversent en dehors de la surface de la plaque.

Les liquides alimentaires sont généralement de l'eau, des solutions aqueuses ou des solutions organiques dans lesquels l'eau est un composant.

Différents systèmes ou dispositifs ayant pour objectif la rétention des liquides sur des surfaces de cuisson sont décrits dans l'état de la technique.

Le document EP1178265 A1 décrit un dispositif de cuisson comprenant une plaque vitrocéramique sur la surface de laquelle sont directement gravés des canaux dans lesquels les liquides à retenir s'écoulent. Toutefois, la gravure de tels canaux est susceptible de rendre la plaque vitrocéramique localement plus fragile et de provoquer des fractures intempestives lors de l'usinage ou de la manutention des produits.

Le document FR2913098 A1 propose une solution alternative consistant à placer un capteur de niveau sur les bords des récipients de cuisson de manière à avertir toute augmentation du niveau de liquide avant qu'il ne déborde. L'inconvénient principal est que chaque récipient requiert un capteur. En cas d'oubli ou de non activation, les liquides ne sont pas retenus.

Le document WO2011056742 A1 décrit un revêtement hydrophobe disposé sur la périphérie d'une surface de cuisson ou entourant certaines régions de ladite surface, de manière à créer des réservoirs de rétention. Ces revêtements hydrophobes ont pour avantage de retenir un certain volume de liquide dans les réservoirs qu'ils délimitent. Dans ce type réservoir, le liquide prend généralement la forme d'un film. Le volume du liquide est ainsi défini par la surface du réservoir et par la hauteur du film formé. Or, dans le cadre de recherches menées sur l'écoulement des liquides en contact avec des revêtements hydrophobes, il a été constaté que la hauteur atteinte par le film avant que le liquide ne déborde au-delà du revêtement hydrophobe est inférieure à la hauteur capillaire théorique. Il en résulte que le volume de liquide retenu est inférieur au volume recherché et que le temps de rétention est inférieur à celui attendu. La raison en sont les mouvements inhérents au liquide lors de son écoulement qui provoquent des variations locales de la pression interne. A l'interface entre le liquide et le matériau hydrophobe, une variation locale de la pression peut déstabiliser le film de liquide qui se déverse alors en dehors du réservoir.

La plupart des mesures de volume de rétention qui sont reportées dans l'état de la technique pour qualifier les plaques de cuisson munies de réservoirs définis par des revêtements hydrophobes ont été réalisées selon des protocoles dans lesquels il n'y a pas d'écoulement des liquides. Ces protocoles sont dits « statiques ». Le phénomène décrit ci-dessus et qui correspond à la plupart des cas réels de débordement est donc généralement négligé. Les produits comprenant de tels réservoirs apparaissent alors moins performants que ce qui est annoncé.

La présente invention remédie à ces problèmes. Les inventeurs ont pu mettre en évidence qu'une alternance de zones hydrophobes et de zones hydrophiles selon un motif satisfaisant certaines contraintes géométriques permet d'améliorer la rétention des liquides en mouvement, notamment de ralentir voire suspendre leur écoulement. Les constituants des zones hydrophobes, lorsque les paramètres caractérisant leur caractère hydrophobe satisfont certains critères, peuvent également accroitre cette capacité de rétention.

La présente invention a donc pour objet une plaque vitrocéramique pour dispositif de cuisson comprenant :
- une première face principale susceptible d'être en contact avec des liquides lorsque la plaque est en cours d'utilisation, une deuxième face principale et un bord,
- un cordon de rétention des liquides fixé sur et en contact de ladite première face principale.

La plaque vitrocéramique est caractérisée en ce que ledit cordon de rétention :
- entoure au moins une région de ladite première face principale de manière à former un réservoir de rétention des liquides, et
- -comprend au moins deux sous-cordons hydrophobes inscrits les uns dans les autres et séparés par des zones hydrophiles, la largeur de la zone hydrophile entre deux sous-cordons consécutifs est partout comprise entre 500 µm et 2,5 cm,les sous-cordons hydrophobes étant tels que lorsqu'ils sont en contact avec de l'eau, l'hystérésis H de l'angle de contact entre lesdits sous-cordons hydrophobes et l'eau est supérieure ou égale à 20°, ladite hystérésis H de l'angle de contact étant définie comme la différence entre l'angle d'avancée Θa et l'angle de reculée Θr l'eau sur lesdits sous-cordons hydrophobes.

L'expression « lorsqu'elle est en cours d'utilisation » signifie que la plaque vitrocéramique est utilisée dans un dispositif de cuisson et que des ustensiles de cuisine ou des récipients contenant des liquides sont utilisés ou manipulés sur ou au-dessus de sa surface apte à être en contact avec des liquides.

Dans la suite du texte, pour des raisons de clarté et de concision, l'expression « surface de la plaque vitrocéramique » ou ses équivalents peuvent être employés. Cette expression désigne la surface de la face de la plaque vitrocéramique.

Le caractère hydrophobe ou hydrophile d'un matériau est habituellement défini selon la valeur de l'angle contact que forme une goutte d'eau statique en contact avec la surface du matériau. La ligne de contact est la ligne d'interface triple entre l'eau, le matériau et l'air. L'angle de contact, dit statique, correspond à l'angle formé entre le plan tangent à la surface de la goutte d'eau et le plan de la surface du matériau située sous la goutte d'eau. Lorsque la valeur de l'angle est inférieure à 90°, le matériau est dit hydrophile, lorsqu'elle est égale ou supérieure à 90°, il est dit hydrophobe.

Les mesures des angles de contact s'effectuent généralement avec un goniomètre. L'instrument dépose une goutte d'eau de volume calibré sur une surface. Au moyen d'une caméra, un logiciel d'analyse d'image détecte la forme de la goutte, la localisation du substrat, puis mesure l'angle de contact. Des exemples de goniomètre sont les goniomètres DSA100 ou encore MobileDrop GH11 commercialisés par la société Krüss. Un exemple de protocole de mesure est le protocole décrit dans la norme ASTM D7334-08(2013), Standard Practice for Surface Wettability of Coatings, Substrates and Pigments by Advancing Contact Angle Measurement.

Pour la présente invention, le caractère hydrophobe ou hydrophile d'un matériau est défini selon la définition précédente. Ainsi, la valeur de l'angle de contact formé par une goutte d'eau sur les zones hydrophiles est inférieure à 90°. La valeur de l'angle de contact formé par une goutte d'eau sur les sous-cordons hydrophobes est égale ou supérieure à 90°.

Dans un mode de réalisation, les zones hydrophiles comprennent un ou plusieurs revêtements hydrophiles déposés sur la surface de la plaque vitrocéramique. Ces revêtements hydrophiles ont pour objectif d'accroitre avantageusement le caractère hydrophile de la surface de la plaque afin d'augmenter la capacité de rétention.

Ces revêtements hydrophiles peuvent être de nature organique ou inorganique. Le ou les constituants des revêtements hydrophiles peuvent être choisis parmi polyvinyliques, les poly acrylonitriles, les poly méthyl acrylates, les acétates de cellulose, ou les copolymères d'acétates de vinyle et de chlorures de vinyle. Des exemples de matériaux inorganiques sont la silice, l'alumine ou la zircone.

Ces revêtements peuvent être déposés selon une méthode de dépôt choisi parmi le dépôt chimique en phase liquide, le dépôt chimique en phase vapeur, le dépôt chimique sous vide, la sérigraphie, l'enduction centrifuge, l'enduction par trempage, le dépôt par impression à jet, le dépôt par impression tridimensionnelle.

Dans un mode préféré de réalisation, les zones hydrophiles sont constituées par la surface de la plaque vitrocéramique n'ayant subi aucun traitement de surface car les silicates et les aluminosilicates composant la plupart des plaques vitrocéramiques sont des matériaux naturellement hydrophiles. Ce mode de réalisation est plus rapide et plus simple à mettre en œuvre.

Selon l'invention, le cordon de rétention entoure au moins une région de la face de la plaque vitrocéramique sur laquelle des liquides sont susceptibles de se déverser lors de la cuisson ou de la préparation des aliments. Il délimite alors un réservoir de rétention ou de confinement de liquide. Un liquide qui déborde d'un récipient ou d'un ustensile de cuisson et se répand sur la région ainsi délimitée et forme un film dont l'écoulement est bloqué par le cordon de rétention.

Les récipients ou ustensiles de cuisson sont généralement disposés sur les zones de la face de la plaque vitrocéramique sous lesquelles sont situés des éléments chauffants lorsque la plaque vitrocéramique est utilisée dans un dispositif de cuisson. Le cordon de rétention peut entourer avantageusement au moins une de ces zones.

Dans un mode de réalisation, le cordon de rétention est placé à au plus 3 cm, en particulier au plus 2 cm, voire au plus 1 cm du bord de ladite plaque vitrocéramique. Ainsi placé à la périphérie de la plaque, il suffit d'un seul cordon de rétention pour entourer l'ensemble des zones de la plaque vitrocéramique où sont utilisées les ustensiles ou récipient de cuisson. Ce mode de réalisation est particulièrement avantageux pour les dispositifs de cuisson dans lesquels les zones de chauffage ou de cuisson sont constituées par une ou plusieurs portions de la surface de la plaque vitrocéramique. Il est également plus simple et plus rapide à mettre œuvre car il nécessite le dépôt d'un seul cordon.

Dans un mode alternatif de réalisation, plusieurs cordons de rétention sont fixés sur la face principale de la plaque vitrocéramique susceptible d'être en contact avec des liquides lors de son utilisation. Chacun de ces cordons de rétention peuvent entourer différentes régions de la surface. Ces régions peuvent être éloignées ou au contact les unes des autres. Certains de ces différents cordons de rétention peuvent être distincts ou unis, c'est-à-dire qu'ils peuvent ou non avoir des portions communes. De préférence, ces cordons de rétention entourent des régions de la plaque vitrocéramique sur lesquelles des récipients ou des ustensiles de cuisson susceptibles de contenir des liquides sont utilisés.

La superficie de la région de la plaque vitrocéramique entourées par au moins un cordon de rétention représente avantageusement au moins 60%, en particulier 70%, de préférence 80%, voire 90% de la superficie de la face de la plaque vitrocéramique.

La largeur d'un cordon de rétention peut être avantageusement comprise entre 2 cm et 6 cm, en particulier entre 3 et 6 cm, voire entre 3 et 5 cm.

La forme géométrique de la ou des régions délimitées par les cordons hydrophobes peut être quelconque, rectangulaire, circulaire, ovale, triangulaire, trapézoïdale, parallélépipédique ou encore suivre la forme d'un motif esthétique. La forme géométrique est une affaire de choix selon les contraintes techniques imposées par la méthode de dépôt du cordon et l'utilisation de la plaque vitrocéramique, ou encore selon le goût esthétique des clients ou de celui qui met en œuvre l'invention.

Selon l'invention, les cordons de rétention comprennent aux moins deux sous-cordons hydrophobes inscrits les uns dans les autres et séparées par des zones hydrophiles. Autrement dit, chaque sous-cordon hydrophobe délimite individuellement une région de la surface de la plaque vitrocéramique. L'expression « inscrits les uns dans les autres » appliquée aux sous-cordons hydrophobes signifie alors que chaque sous-cordon hydrophobe consécutif à un autre sous-cordon hydrophobe en partant du bord de la plaque vitrocéramique est situé dans la région de la surface de la plaque délimitée par cet autre sous-cordon hydrophobe.

Les sous-cordons consécutifs doivent être suffisamment proches de manière à ce que la hauteur du film formé par le liquide dans la région délimitée par le cordon de rétention soit supérieure à la hauteur qui serait obtenue à l'aide d'un cordon de rétention selon l'état de la technique et qui ne comprendrait qu'un seul sous-cordon.

Deux sous-cordons consécutifs peuvent être irrégulièrement ou régulièrement espacés tant que la largeur de la zone hydrophile entre deux sous-cordons consécutifs est partout comprise entre 500 µm et 2,5 cm, en particulier entre 500 µm et 1,2 cm, voire entre 700 µm et 1,2 cm.

D'autre part, la largeur des sous-cordons hydrophobes peut avantageusement être comprise entre 5 mm et 20 mm, en particulier entre 7 mm et 18 mm, voire entre 10 mm et 15 mm sans que l'effet de rétention ne soit affecté. Cette caractéristique permet ainsi de réduire la quantité de matière nécessaire pour former les sous-cordons hydrophobes.

Le contact d'une goutte de liquide avec la surface d'un matériau peut également être caractérisé à l'aide de deux autres angles de contact : l'angle d'avancée θa et l'angle de reculée θr. Ces deux angles sont dits dynamiques car ils correspondent aux angles de contact que forme une goutte d'eau en contact avec la surface du matériau lorsque sa ligne de contact avec le matériau se déplace sous l'effet d'une augmentation ou d'une diminution de son volume. La ligne de contact correspond à la ligne triple formée à l'interface entre l'eau de la goutte, la surface du matériau et l'atmosphère.

Plus précisément, l'angle d'avancée θa est l'angle formé entre le plan tangent à la surface de la goutte d'eau et le plan de la surface du matériau située sous la goutte d'eau avant que la ligne de contact n'avance sous l'effet de l'augmentation du volume d'eau de la goutte.

L'angle de reculée θr est l'angle formé entre le plan tangent à la surface de la goutte d'eau et le plan de la surface du matériau située sous la goutte d'eau avant que la ligne de contact ne recule sous l'effet d'une diminution du volume d'eau de la goutte.

Selon les connaissances actuelles disponibles dans l'état de la technique, l'angle d'avancée θa peut être considéré comme une mesure du caractère mouillant ou répulsif de la surface, et l'angle de reculée θr comme une mesure de l'adhésion de la goutte d'eau sur la surface.

La mesure des angles d'avancé et de reculée est généralement réalisée à l'aide des mêmes instruments que ceux utilisés pour la mesure d'angle de contact.

Le volume de liquide retenu dépend de la superficie de la région délimitée par le cordon de rétention et de la hauteur ou épaisseur atteinte par le film formé. Or, l'écoulement de liquide en provenance d'un récipient ou d'un ustensile est généralement continu avec un certain débit. La durée au-delà de laquelle le liquide se déverse en dehors du réservoir dépend donc à la fois de la superficie de la région délimitée par le cordon de rétention, du débit de l'écoulement et de la hauteur maximale qu'atteint liquide dans le réservoir.

Dans un mode de réalisation préféré, lorsque les sous-cordons hydrophobes sont en contact avec de l'eau, l'hystérésis H de l'angle de contact entre lesdits sous-cordons hydrophobes et le liquide est supérieur ou égale à 20°, en particulier supérieure ou égale à 25°, voire supérieure ou égale à 30°, ledit hystérésis H de l'angle de contact étant définie comme la différence entre l'angle d'avancée θa et l'angle de reculée θr du liquide sur un lesdits sous-cordons hydrophobes, autrement dit H = θa - θr. Il a été constaté de manière assez surprenante, que, lorsque la valeur de cette hystérésis est supérieure ou égale à 20°, en particulier supérieure ou égale à 25°, voire supérieure ou égale 30°, la hauteur maximale du film de liquide, c'est-à-dire le volume de liquide retenu, augmente. La rétention du liquide en mouvement est alors favorisée. La valeur de l'hystérésis est de préférence inférieure ou égale à 100.

Cet effet surprenant est particulièrement important lorsque l'angle d'avancée, θa, du liquide sur les sous-cordons est également compris entre 108 et 120°, en particulier entre 110° et 120°.

Il existe une très grande variété de matériaux ou composés hydrophobes pouvant convenir à la réalisation des sous-cordons hydrophobes. Parmi ces matériaux, l'homme du métier peut notamment choisir ceux dont leurs autres propriétés, notamment thermiques et/ou mécaniques, sont compatibles avec l'application ou l'environnement d'utilisation de la plaque vitrocéramique.

Par exemple, lorsque la plaque vitrocéramique est utilisée dans un dispositif de cuisson destiné à des usages domestiques, l'homme du métier peut choisir le ou les matériaux hydrophobes qui résistent aussi aux contacts avec des liquides chauds, dont les températures sont typiquement comprises entre 50°C et 150°C, sans perdre leur caractère hydrophobe. De même, il peut être avantageux que les matériaux hydrophobes résistent à des cycles thermiques de chauffage et de refroidissement sans qu'ils ne se détériorent ou perdent leur caractère hydrophobe.

Les matériaux hydrophobes peuvent également être avantageusement choisis de sorte qu'ils aient aussi une résistance mécanique élevée, notamment à l'abrasion. En effet, lorsque les plaques vitrocéramiques sont utilisées dans des dispositifs de cuisson à usage domestique, elles sont soumises à de nombreux frottements liés aux mouvements des ustensiles et/ou récipients de cuisson sur leur surface. Si les sous-cordons hydrophobes sont disposés à proximité des zones de la surface des plaques vitrocéramiques où ces mouvements sont intenses et fréquents, ils devront aussi être résistants à l'abrasion. En revanche, si les sous-cordons hydrophobes sont éloignés de ces zones, par exemple lorsque le cordon de rétention est placé à proximité de la périphérie des plaques vitrocéramiques, ils seront soumis à moins de frottements. Une résistance importante à l'abrasion n'est donc pas toujours nécessaire selon les choix de la disposition du ou des cordons de rétention.

Les matériaux hydrophobes pouvant notamment convenir à la réalisation des sous-cordons hydrophobes peuvent être organiques ou inorganiques. De manière avantageuse, les sous-cordons hydrophobes peuvent comprendre un ou plusieurs composés organiques ou inorganiques dont la tension de surface est d'au plus 20 mN.m⁻¹, en particulier d'au plus 15 mN.m⁻¹, voire d'au plus 10 mN.m⁻¹. De tels composés hydrophobes ont généralement aussi un caractère lipophobe ou oléophobe qui peut être utile lorsque les liquides débordant des récipients ou ustensiles de cuisine sont enrichis en corps gras.

A titre d'exemple non limitatif, les sous-cordons hydrophobes peuvent comprendre un ou plusieurs composés organiques choisis parmi les polysiloxanes, les organosiloxanes, les fluorosiloxanes, les fluorocarbures, les fluoropolymères, les fluorosilanes et leur mélange.

Egalement à titre d'exemple non limitatif, les sous-cordons hydrophobes peuvent comprendre un ou plusieurs composés inorganiques choisis parmi la silice colloïdale, la silice nano-particulaire, le graphène et leur mélange.

Les sous-cordons hydrophobes peuvent aussi être des composites, c'est-à-dire comprendre un mélange de matériaux ayant globalement un caractère hydrophobe. Par exemple, ils peuvent être à base d'un mélange de matériaux non hydrophobes et de particules hydrophobes, lesdites particules hydrophobes conférant au mélange un caractère hydrophobe. Ces particules hydrophobes peuvent être composées des matériaux hydrophobes cités précédemment.

Généralement seules les surfaces des sous-cordons sont principalement en contact avec les liquides lorsque ceux-ci s'écoulent sur la plaque vitrocéramique. Par conséquent, il peut être suffisant que seules ces surfaces aient un caractère hydrophobe. Dans un tel cas, les sous-cordons peuvent comprendre une partie non hydrophobe sur laquelle est déposé un revêtement hydrophobe afin de lui conférer un caractère hydrophobe en surface. Par exemple, la partie non hydrophobe peut être un émail et le revêtement hydrophobe peut être à base d'un des matériaux hydrophobes cités ci-dessus. Un tel mode de réalisation est particulièrement avantageux car l'émail peut favoriser l'adhésion de revêtement hydrophobe sur la surface de la plaque vitrocéramique et apporter une résistance mécanique supplémentaire.

Dans ce mode de réalisation, les sous-cordons hydrophobes comprennent un revêtement hydrophobe. Le dépôt des sous-cordons hydrophobes peut alors être réalisé en deux étapes. Une première étape dans laquelle l'émail peut être déposé sur la surface de la plaque vitrocéramique, puis une deuxième étape dans laquelle le revêtement hydrophobe est déposé sur l'émail.

Outre la nature des matériaux qui les composent, le caractère hydrophobe des matériaux dépend également de la morphologie de leur surface.

Dans un mode de réalisation particulier de l'invention, la valeur du paramètre de rugosité, Ra, des sous-cordons hydrophobes est comprise entre 1 et 10 µm, de préférence entre 2 et 5 µm. Dans un autre mode de réalisation de l'invention, la valeur du paramètre de pic-vallée, Rz, des sous-cordons hydrophobes est comprise entre 5 et 50 µm, de préférence entre 10 et 20 µm. Ces deux modes peuvent être combinés.

Les spécifications pour la mesure des paramètres Ra et Rz sont décrits dans la norme ISO 4288 :1996, Geometrical Product Specifications (GPS) - Surface texture: Profile method - Terms, definitions and surface texture parameters. La longueur de coupure (wavelength cut-off) utilisé pour la mesure des paramètres Ra et Rz dans la présente invention est 2,5mm.

Tous les modes de réalisation décrits peuvent être combinés.

La présente invention a également pour objet un procédé de fabrication d'une plaque vitrocéramique telle que décrite précédemment. Dans ce procédé de fabrication, les sous-cordons hydrophobes peuvent être déposés selon l'une ou plusieurs des méthodes choisies parmi le dépôt chimique en phase liquide, le dépôt chimique en phase gazeuse, le dépôt chimique sous vide, telles que le spray, la sérigraphie, l'enduction centrifuge, l'enduction par trempage, le dépôt par impression à jet, le chiffonnage (wiping), la flexographie, la pulvérisation cathodique magnétron, le dépôt par impression tridimensionnelle.

La présente invention a également trait à un dispositif de cuisson dans lequel une plaque vitrocéramique munie d'un cordon de rétention des liquides tel que décrit précédemment est utilisée.

Les dispositifs de cuisson comprennent aussi généralement des unités de contrôle et/ou d'affichage permettant de régler et/ou d'afficher des informations relatives, par exemple, à la température ou à la puissance de chauffage. Ces unités peuvent être disposées en-dessous ou au-dessus, en contact ou non, de la plaque vitrocéramique. Les termes « en-dessous » et « au-dessus » sont définis relativement à l'orientation de la face principale susceptible d'être en contact avec les liquides : la plaque vitrocéramique est orientée de manière à ce que cette face soit la face supérieure du dispositif de cuisson sur laquelle les ustensiles ou récipients de cuisson sont utilisés.

Par exemple, les unités d'affichage peuvent comprendre des moyens de projection des informations, placés en-dessous de la plaque vitrocéramique, qui projettent des signaux lumineux sur la face opposée à la face principale susceptible d'être en contact avec les liquides. Les informations projetées sont alors visibles par transparence au travers de la plaque vitrocéramique.

Les unités de commande peuvent être des dispositifs tactiles comprenant des moyens de détection de placés en-dessous de la plaque de la plaque vitrocéramique. Ces moyens confèrent à certaines zones de la plaque une fonction de pointage tactile qui peut être activée grâce au toucher ou à la pression des doigts sur les zones correspondantes de la face principale susceptible d'être en contact avec les liquides. La mise en fonctionnement du dispositif de cuisson et le réglage de la puissance de chauffe peuvent alors être effectués simplement par le mouvement des doigts. Alternativement, les unités de commandes peuvent être des boutons mécaniques disposés sur la face susceptible d'être en contact avec les liquides et actionnables par rotation.

Lorsqu'un liquide déborde d'un récipient de cuisson et s'écoule sur la face de la plaque vitrocéramique, il est avantageux qu'il n'atteigne pas les unités de commande. Si les unités de commandes sont, par exemple, des boutons mécaniques, ils ne seront pas détériorés. Si ces unités sont des dispositifs tactiles, la fonction de pointage tactile ne sera pas perturbée par la présence du liquide. Le dispositif de cuisson peut alors toujours être arrêté en toute sécurité.

De préférence, le dispositif de cuisson selon l'invention comprend en outre une unité de commande qui n'est pas comprise dans la ou les régions de la plaque vitrocéramique délimitées par le cordon de rétention.

Les avantages de l'invention sont illustrés par les figures et les exemples décrits ci-après.
La figure 1 est une représentation schématique d'une plaque vitrocéramique selon un premier mode de réalisation de l'invention.
La figure 2 est une représentation schématique d'une plaque vitrocéramique selon un second mode de réalisation de l'invention.
La figure 3 est une représentation schématique d'une coupe transverse selon le plan A du détail III de la figure 1.
La figure 4 est une représentation schématique d'une coupe transverse selon le plan B du détail IV de la figure 2.
La figure 5 est une représentation schématique d'une plaque vitrocéramique selon un troisième mode de réalisation de l'invention.
La figure 6 est une représentation schématique d'un dispositif de cuisson comprenant une plaque vitrocéramique selon un quatrième mode de réalisation de l'invention.

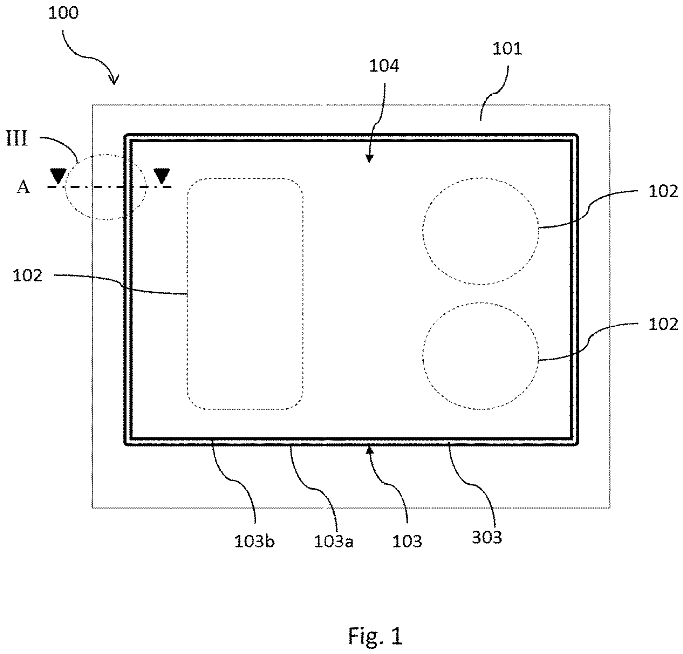

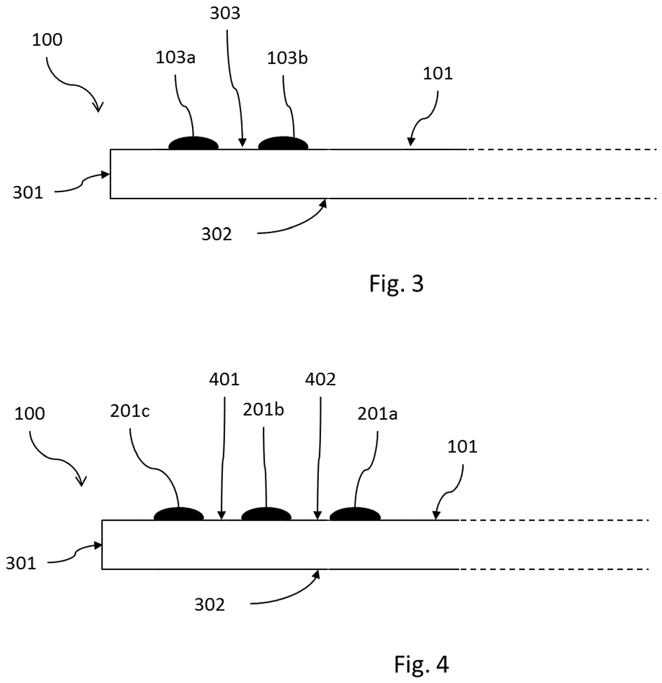

La figure 1 représente une plaque vitrocéramique 100 selon un premier mode de réalisation de l'invention. Elle comprend une face principale 101 susceptible d'être en contact avec les liquides lorsqu'elle est en cours d'utilisation. A des fins purement illustratives, des zones 102 de la face de la plaque vitrocéramique sous lesquelles peuvent être situés des éléments chauffants lorsque la plaque vitrocéramique est utilisée dans un dispositif de cuisson sont également représentées. La plaque vitrocéramique comprend un seul cordon de rétention 103 des liquides qui entoure une région 104 de la face principale 101 de la plaque susceptible d'être en contact avec les liquides. Le cordon de rétention 103 est situé à proximité de la périphérie de la plaque vitrocéramique et entoure des zones 102 de la face de la plaque vitrocéramique sous lesquelles peuvent être situés des éléments chauffants lorsque la plaque vitrocéramique est utilisée dans un dispositif de cuisson. Le cordon de rétention des liquides comprend deux sous-cordons 103a-103b hydrophobes séparées par une zone hydrophile 303. L'alternance des sous-cordons hydrophobes et de la zone hydrophile est représentée sur la figure 3 qui correspond à une coupe transverse du détail III selon le plan A.

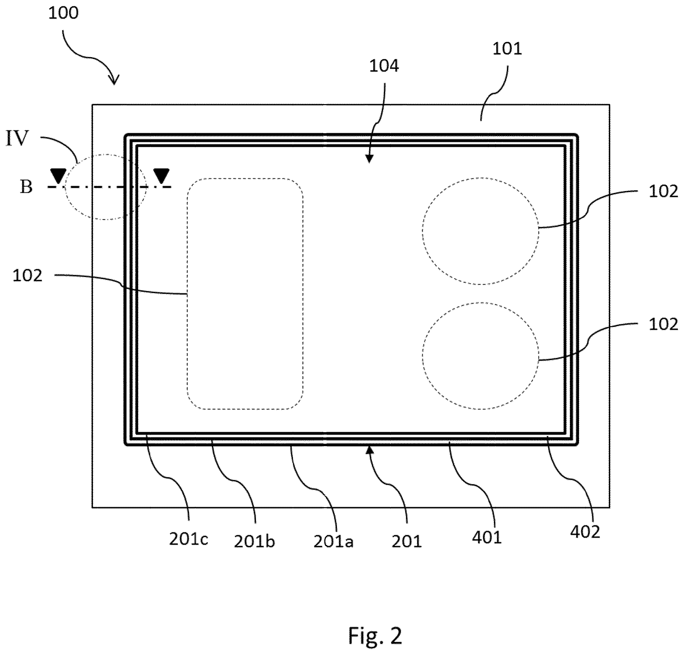

La figure 2 représente une plaque vitrocéramique 100 selon un second mode de réalisation de l'invention. Elle comprend une face principale 101 susceptible d'être en contact avec les liquides lorsqu'elle est en cours d'utilisation. Des zones 102 de la face de la plaque vitrocéramique sous lesquelles peuvent être situés des éléments chauffants lorsque la plaque vitrocéramique est utilisée dans un dispositif de cuisson sont également représentées. La plaque vitrocéramique comprend un seul cordon de rétention 201 des liquides qui entoure une région 104 de la face principale 101 de la plaque susceptible d'être en contact avec les liquides. Le cordon de rétention 201 est situé à proximité de la périphérie de la plaque vitrocéramique et entoure des zones 102 de la face de la plaque vitrocéramique sous lesquelles peuvent être situés des éléments chauffants lorsque la plaque vitrocéramique est utilisée dans un dispositif de cuisson. Le cordon de rétention des liquides comprend trois sous-cordons 201a-201c hydrophobes séparées par des zones hydrophiles 401 et 402. L'alternance des sous-cordons hydrophobes et des zones hydrophiles sont représentés sur la figure 4 qui correspond à une coupe transverse du détail IV selon le plan B.

Une coupe transverse du détail III selon le plan A de la figure 1 est représentée sur la figure 3. La plaque vitrocéramique 100 comprend une première face principale 101, une deuxième face principale 302 et un bord 301. La face principale 101 est susceptible d'être en contact avec des liquides lorsque la plaque est en cours d'utilisation. Le cordon de rétention 103 est fixé sur et en contact de la face principale 101 susceptible d'être en contact avec des liquides. Il comprend deux sous-cordons hydrophobes 103a-103b séparés par une zone hydrophile 303. Les deux sous-cordons consécutifs peuvent être irrégulièrement ou régulièrement espacés. La largeur de la zone hydrophobe est partout comprise entre 500 µm et 2,5 cm, en particulier entre 500 µm et 1,2 cm, voire entre 700 µm et 1,2 cm. La largeur des sous-cordons hydrophobes peut avantageusement être comprise entre 5 mm et 20 mm, en particulier entre 7 mm et 18 mm, voire entre 10 mm et 15 mm.

La figure 4 représente une coupe transverse selon le plan B du détail IV de la figure 2. La plaque vitrocéramique 100 comprend une première face principale 101, une deuxième face principale 302 et un bord 301. La face principale 101 est susceptible d'être en contact avec des liquides lorsque la plaque est en cours d'utilisation. Le cordon de rétention 201 est fixé sur et en contact de la face principale 101 susceptible d'être en contact avec des liquides. Il comprend trois sous-cordons hydrophobes 201a-201c séparés alternativement par deux zones hydrophiles 401 et 402. Les trois sous-cordons consécutifs peuvent être irrégulièrement ou régulièrement espacés. La largeur des zones hydrophobes est partout comprise entre 500 µm et 2,5 cm, en particulier entre 500 µm et 1,2 cm, voire entre 700 µm et 1,2 cm. La largeur des sous-cordons hydrophobes peut avantageusement être comprise entre 5 mm et 20 mm, en particulier entre 7 mm et 18 mm, voire entre 10 mm et 15 mm.

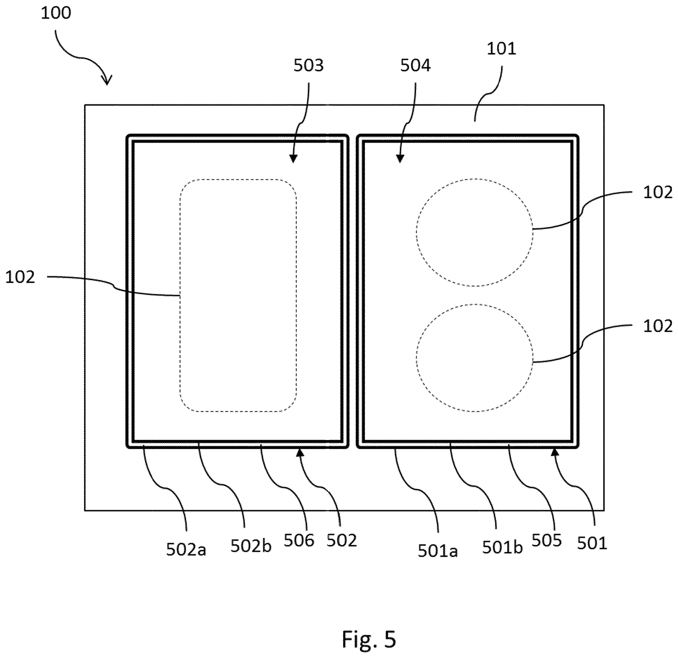

La figure 5 représente une plaque vitrocéramique 100 selon un troisième mode de réalisation. La plaque vitrocéramique comprend une face 101 susceptible d'être en contact avec les liquides lorsqu'elle est en cours d'utilisation. Des zones 102 de la face de la plaque vitrocéramique sous lesquelles peuvent être situés des éléments chauffants lorsque la plaque vitrocéramique est utilisée dans un dispositif de cuisson sont également représentées. La plaque vitrocéramique comprend un deux cordons de rétention 501 et 502 des liquides qui entourent deux régions 503 et 504 de la face de la plaque susceptible d'être en contact avec les liquides. Les cordons de rétention entourent des zones 102 de la face de la plaque vitrocéramique sous lesquelles peuvent être situés des éléments chauffants lorsque la plaque vitrocéramique est utilisée dans un dispositif de cuisson. Chaque cordon de rétention 501 et 502 des liquides comprend deux sous-cordons 501a-501b et 502a-502b respectivement hydrophobes séparées par des zones hydrophiles 505 et 506.

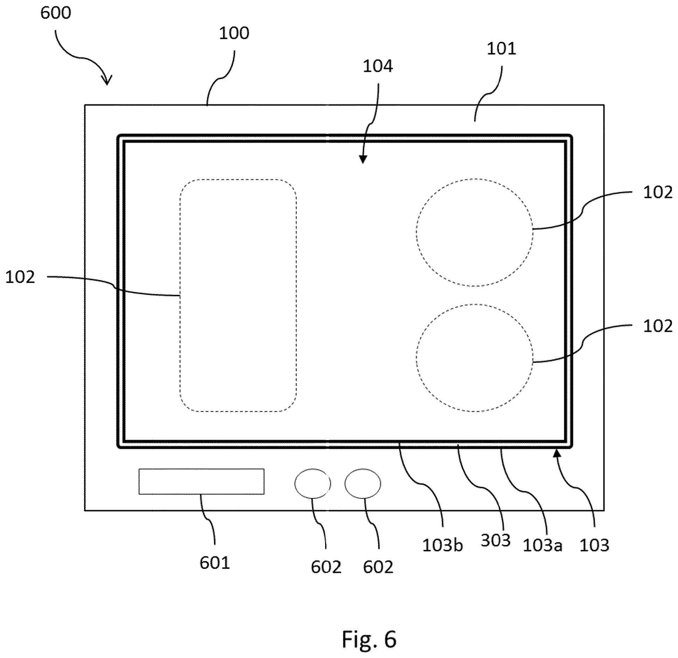

Un dispositif de cuisson 600 comprenant une plaque vitrocéramique selon une variante du premier mode de réalisation de l'invention de la figure 1 est représenté en vue de dessus sur la figure 6. La plaque vitrocéramique 100 comprenant une face principale 101 susceptible d'être en contact avec les liquides lorsqu'elle est en cours d'utilisation. A des fins purement illustratives, des zones 102 de la face de la plaque vitrocéramique sous lesquelles peuvent être situés des éléments chauffants lorsque la plaque vitrocéramique est utilisée dans un dispositif de cuisson sont également représentées. La plaque vitrocéramique comprend un seul cordon de rétention 103 des liquides qui entoure une région 104 de la face principale 101 de la plaque susceptible d'être en contact avec les liquides. Le cordon de rétention 103 est situé à proximité de la périphérie de la plaque vitrocéramique et entoure des zones 102 de la face de la plaque vitrocéramique sous lesquelles peuvent être situés des éléments chauffants. Le cordon de rétention des liquides comprend deux sous-cordons 103a-103b hydrophobes séparées par une zone hydrophile 303. Le dispositif de cuisson comprend une unité d'affichage 601 et deux unités de commande 602. Les unités d'affichage 601 et de commande 602 ne sont pas comprises dans la région 104 délimitée par le cordon de rétention 103.

### Exemples

Afin d'illustrer l'effet technique obtenu par l'invention, deux exemples de plaque vitrocéramique selon l'invention sont comparés à deux exemples de plaque vitrocéramique munie d'un dispositif ou système de rétention selon l'état de la technique.

La plaque vitrocéramique utilisée dans les exemples est une plaque vitrocéramique aluminosilicate de lithium disponible dans le commerce.

Dans les exemples selon l'invention, un cordon de rétention comprenant deux sous-cordons hydrophobes est fixé sur et en contact de la face de deux plaques vitrocéramiques selon l'arrangement illustré sur la figure 1. Pour chacune des plaques vitrocéramiques, la largeur de chacun des sous-cordons hydrophobes et la largeur de la zone hydrophile les séparant sont reportées dans le tableau 1 (exemples 1 et 2). La zone hydrophile est constituée par la surface de la plaque vitrocéramique n'ayant subi aucun traitement.

Pour réaliser les exemples de plaque vitrocéramique selon l'état de la technique, un cordon de rétention ne comprenant qu'un seul sous-cordon hydrophobe est fixé sur et en contact de la face de deux plaques vitrocéramiques selon même arrangement illustré sur la figure 1 (exemples 3 et 4). Les exemples 3 et 4 sont des exemples comparatifs. Afin d'éviter tout biais expérimental lié au redimensionnement des cordons de rétention, la largeur des sous-cordons a été adaptée de manière à ce que la surface couverte par les sous-cordons et la surface de la région entourée par le cordon de rétention soient identiques à celles des exemples 1 et 2.

Dans les quatre exemples, la superficie de la région (104) entourée par le cordon de rétention est identique.

Les sous-cordons hydrophobes sont à base de trichlorosilane fluoré. Ils ont été déposés par évaporation sous pression réduite (dépôt chimique en phase vapeur). Lors du dépôt, les régions de la plaque vitrocéramique en dehors des sous-cordons hydrophobes ont été protégées à l'aide d'un masque imperméable aux composés fluorés.

Les performances de rétention de chaque plaque vitrocéramique ont été évaluées par le versement d'eau au centre des régions entourées par le cordon de rétention avec un débit moyen de 2,4 à 2,5 mL/s. Ce débit est représentatif du débit d'un liquide débordant d'un récipient de cuisson.

Le volume maximal retenu et le temps de rétention maximum avant débordement au-delà des cordons de rétention ont été mesurés. Les résultats sont reportés dans le tableau 1.

La comparaison des exemples 1 et 2 selon l'invention et des exemples comparatifs 3 et 4 selon l'état de la technique montre qu'une plaque vitrocéramique selon l'invention permet un gain de 7 à 8% sur le volume de liquide retenu et le temps de rétention avant débordement.

| **Tableau 1** | **Exemple 1** | **Exemple 2** | **Exemple 3 (comparatif)** | **Exemple 4 (comparatif)** |
|---|---|---|---|---|
| **Nombre de sous-cordons hydrophobes** | 2 | 2 | 1 | 1 |
| **Largeur des sous-cordons hydrophobes (cm)** | 1 | 1 | 1,81 | 1,57 |
| **Largeur des zones hydrophiles (cm)** | 1 | 2 | - | - |
| **Temps avant débordement (s)** | 47 | 46 | 43 | 44 |
| **Volume maximal avant débordement (mL)** | 112 | 113 | 105 | 105 |

Trois exemples de plaques vitrocéramiques selon l'invention ont été réalisés avec des sous-cordons hydrophobes comprenant des composés hydrophobes différents. Certains de ces composés sont disponibles dans le commerce.

Dans chaque exemple, le même type de plaque vitrocéramique est utilisée et la superficie de la région (104) entourée par le cordon de rétention est identique. La plaque vitrocéramique est de type aluminosilicate de lithium. Elle représentative des plaques vitrocéramiques disponible dans le commerce.

Le tableau 2 indique pour chaque exemple le nom commercial du composé hydrophobe utilisé pour les sous-cordons, le type de composé, les valeurs d'angle de contact θc, d'angle d'avancé θa, d'angle de reculée θc, et d'hystérésis H.

Les angles de contact, d'angle d'avancé, d'angle de reculée ont été mesuré à l'aide d'un goniomètre DSA100 commercialisé par la société Krüss.

Dans l'exemple 5, les sous-cordons hydrophobes sont à base de silicone (Diamon fusion ultra (DFI)). Ils ont été déposés en deux fois à l'aide d'un spray ou chiffonnage (dépôt chimique en phase liquide).

Dans l'exemple 6, les sous-cordons hydrophobes sont à base de silice et silane fluoré (SiF7E). Ils ont été déposés selon le protocole comprenant les étapes suivantes :
- dépôt d'une solution de TEOS hydrolysés à 0,3% en poids dans l'isopropanol à pH 2 en spray (dépôt chimique en phase liquide),
- séchage d'une durée de 5 minutes,
- dépôt d'une solution de SiF7E dans l'isopropanol à pH 2 en spray ou chiffonnage (dépôt chimique en phase liquide),
- séchage 15 minutes.

Dans l'exemple 7, les sous-cordons hydrophobes sont à base du produit Nanofilm ABW.

Les performances de rétention de chaque plaque vitrocéramique ont été évaluées par le versement d'eau au centre de la région entourée par le cordon de rétention et par la mesure de la hauteur maximale, h, du film de liquide retenue et du temps de rétention maximum avant débordement au-delà du cordon.

En condition statique, l'eau est déposée lentement en veillant à minimiser les mouvements du liquide, et la hauteur du film d'eau formé est mesurée continuellement jusqu'au débordement au-delà du cordon de rétention.

En condition dynamique, l'eau est versée avec un débit représentatif du débit d'un liquide débordant d'un récipient de cuisson, et la hauteur du film d'eau formé et le temps est mesuré continuellement jusqu'au débordement au-delà du cordon de rétention. Les mesures ont été réalisées pour trois valeurs de débit : 1,8 mL/s (débit 1), 2,3 mL/s (débit 2) et 2,7 mL/s (débit 3).

Les valeurs maximales mesurées sont regroupés dans le tableau 2.

Les exemples montrent qu'une valeur d'hystérésis, H, supérieure ou égale à 20° augmente les valeurs de la hauteur maximale du film retenu et le temps de rétention avant débordement en condition dynamique par rapport à la condition statique. Les temps de rétention sont notamment 2 à 4 fois plus élevés, surtout lorsque le débit d'écoulement est élevé.

La comparaison des exemples 5 et 7 d'une part, et des exemples 7 et 8 d'autre part, montre qu'une valeur d'hystérésis élevée, en particulier supérieure à 30, permet des temps de rétention plus longs.

La comparaison des exemples 6 et 7 montre que, pour des valeurs d'angle d'avancée similaires, une augmentation de la valeur de l'hystérésis, permet des temps de rétention plus longs.

| **Tableau 2** | | | **Exemple 5** | **Exemple 6** | **Exemple 7** |
|---|---|---|---|---|---|
| **Nom commercial du composé hydrophobe des sous-cordons** | | | Diamon fusion ultra (DFI) | | Nanofilin ABW (Ferro) |
| **Type de composé** | | | silicone | silice et SiF7E | - |
| **Statique** | | **h (mm)** | 3,4 | 4,4 | 4,1 |
| **Dynamique** | **Débit 1** | **h (mm)** | 4,2 | 4,6 | 4,6 |
| | | **Temps (s)** | 19,9 | 10,1 | 17,7 |
| | **Débit 2** | **h (mm)** | 4,9 | 5,3 | 5 |
| | | **Temps (s)** | 13,2 | 11,2 | 14,9 |
| | **Débit 3** | **h (mm)** | 5 | 5,8 | 5,6 |
| | | **Temps (s)** | 9,7 | 9,8 | 13,7 |
| **Angles de contact** | | **θ** | 105 | 114 | 108 |
| | | **θa** | 108 | 120 | 117 |
| | | **θr** | 80 | 87 | 68 |
| **Hystérésis** | | **H** | 20 | 33 | 49 |

Quatre autres exemples comparatifs, exemples 8, 9, 10 et 11 ont également été réalisés afin d'illustrer l'effet technique de l'invention. Dans ces exemples un cordon de rétention comprenant deux sous-cordons hydrophobes est fixé sur et en contact de la face de deux plaques vitrocéramiques selon l'arrangement illustré sur la figure 1. Pour chacune des plaques vitrocéramiques, la largeur de chacun des sous-cordons hydrophobes et la largeur de la zone hydrophile les séparant sont reportées dans le tableau 1. Dans les exemples 8, 9 et 10, la largeur de la zone hydrophile entre deux sous-cordons consécutifs est dans l'intervalle 500 µm - 2,5 cm. Dans l'exemple 11, la largeur de zone hydrophile est en-dehors cet intervalle. La zone hydrophile est constituée par la surface de la plaque vitrocéramique n'ayant subi aucun traitement. A des fins de comparaison, la superficie de la zone hydrophile (303) entourée par les deux sous-cordons est identique pour tous les exemples 8, 9, 10 et 11.

Les sous-cordons hydrophobes sont à base de trichlorosilane fluoré. Ils ont été déposés par évaporation sous pression réduite (dépôt chimique en phase vapeur). Lors du dépôt, les régions de la plaque vitrocéramique en dehors des sous-cordons hydrophobes ont été protégées à l'aide d'un masque imperméable aux composés fluorés.

Les performances de rétention de chaque plaque vitrocéramique ont été évaluées par le versement d'eau au centre des zones hydrophiles définies par les sous-cordons consécutifs du cordon de rétention avec un débit moyen de 2,4 à 2,5 mL/s. Ce débit est représentatif du débit d'un liquide débordant d'un récipient de cuisson.

Le volume retenu et le temps de rétention maximum avant débordement au-delà de la zone hydrophile ont été mesurés. Les résultats sont reportés dans le tableau 3.

La comparaison des résultats des exemples 8 et 9 selon l'invention avec celui de l'exemple 10 montre qu'une plaque vitrocéramique selon l'invention permet un gain de 23% pour l'exemple 8 et 40% pour l'exemple 9 sur le volume de liquide retenu avant débordement de la zone hydrophile par rapport à une plaque comprenant un cordon de rétention comprenant deux sous-cordons consécutifs définissant une largeur de zone hydrophile de 0,4cm. Par rapport au volume retenu dans l'exemple 9, le gain est de 3% pour l'exemple comparatif 11 comprenant un cordon de rétention avec deux sous-cordons consécutifs définissant une largeur de zone hydrophile supérieure à 2,5cm. Le gain de volume et de temps sont plus particulièrement élevés lorsque la largeur de la zone hydrophile est comprise entre 500µm et 2,5cm, et plus particulièrement entre 0,5cm et 2,5cm.

| **Tableau 3** | **Exemple 8** | **Exemple 9** | **Exemple 10** | **Exemple 11 (comparatif)** |
|---|---|---|---|---|
| **Nombre de sous-cordons hydrophobes** | 2 | 2 | 2 | 2 |
| **Largeur des sous-cordons hydrophobes (cm)** | 1 | 1 | 1 | 1 |
| **Largeur des zones hydrophiles (cm)** | 1 | 2 | 0,4 | 3 |
| **Temps avant débordement de la zone hydrophile (s)** | 27,1 | 30,5 | 21,7 | 31,6 |
| **Volume avant débordement de la zone hydrophile (mL)** | 66,4 | 75,4 | 53,9 | 77,3 |

## Revendications

1. Plaque vitrocéramique (100) pour dispositif de cuisson comprenant :
- une première face principale (101) susceptible d'être en contact avec des liquides lorsque la plaque est en cours d'utilisation, une deuxième face principale (302) et un bord (301),
- un cordon de rétention (103, 201, 501, 502) des liquides fixé sur et en contact de ladite première face principale (101),
dans laquelle ledit cordon de rétention (103, 201, 501, 502) :
- entoure au moins une région (104, 503, 504) de ladite première face principale de manière à former un réservoir de rétention des liquides, et
- comprend au moins deux sous-cordons hydrophobes (103a-b, 201a-c, 501a-b, 502a-b) inscrits les uns dans les autres et séparés par des zones hydrophiles (303, 401-402, 506, 505), le cordon de rétention ( 103, 201, 501, 502) étant **caractérisé en ce que** la largeur de la zone hydrophile entre deux sous-cordons consécutifs est partout comprise entre 500 µm et 2,5 cm, et **en ce que** les sous-cordons hydrophobes (103a-b, 201a-c, 501a-b, 502a-b) sont tels que lorsqu'ils sont en contact avec de l'eau, l'hystérésis H de l'angle de contact entre lesdits sous-cordons hydrophobes et l'eau est supérieure ou égale à 20°, ladite hystérésis H de l'angle de contact étant définie comme la différence entre l'angle d'avancée θa et l'angle de reculée θr l'eau sur lesdits sous-cordons hydrophobes (103a-b, 201a-c, 501a-b, 502a-b).

2. Plaque vitrocéramique (100) selon la revendication 1, telle que ledit angle d'avancée est compris entre 108 et 120°, en particulier entre 110° et 120°.

3. Plaque vitrocéramique (100) selon la revendication 1 ou 2, telle que la largeur des sous-cordons hydrophobes (103a-b, 201a-c, 501a-b, 502a-b) est comprise entre 5 mm et 20 mm, en particulier entre 7 mm et 18 mm, voire entre 10 mm et 15 mm.

4. Plaque vitrocéramique (100) selon l'une quelconque des revendications 1 à 3, telle que la valeur du paramètre de rugosité, Ra, des sous-cordons hydrophobes (103a-b, 201a-c, 501a-b, 502a-b) est comprise entre 1 et 10 µm, de préférence entre 2 et 5 µm.

5. Plaque vitrocéramique (100) selon l'une quelconque des revendications 1 à 4, telle que la valeur du paramètre de pic-vallée, Rz, des sous-cordons hydrophobes (103a-b, 201a-c, 501a-b, 502a-b) est comprise entre 5 et 50 µm, de préférence entre 10 et 20 µm.

6. Plaque vitrocéramique (100) selon l'une quelconque des revendications 1 à 5, telle que la largeur du cordon de rétention (103, 201, 501, 502) est comprise entre 2 cm et 6 cm, en particulier entre 3 et 6 cm, voire entre 3 et 5cm.

7. Plaque vitrocéramique (100) selon l'une quelconque des revendications 1 à 6, telle que le cordon de rétention (103, 201, 501, 502) est placé à au plus 3 cm, en particulier au plus 2 cm, voire au plus 1 cm du bord de ladite plaque vitrocéramique.

8. Plaque vitrocéramique (100) selon l'une quelconque des revendications 1 à 7, telle que la superficie de la région (104, 503, 504) de la plaque vitrocéramique entourée par au moins un cordon de rétention (103, 201, 501, 502) représente au moins 60%, en particulier 70%, de préférence 80%, voire 90% de la superficie de la face principale (101) de la plaque vitrocéramique.

9. Plaque vitrocéramique (100) selon l'une quelconque des revendications 1 à 8, telle que les sous-cordons hydrophobes (103a-b, 201a-c, 501a-b, 502a-b) comprennent un ou plusieurs composés organiques ou inorganiques dont la tension de surface est d'au plus 20 mN.m⁻¹, en particulier d'au plus 15 mN.m⁻¹, voire d'au plus 10 mN.m⁻¹.

10. Plaque vitrocéramique (100) selon l'une quelconque des revendications 1 à 9, telle que les sous-cordons hydrophobes comprennent un ou plusieurs composés organiques choisis parmi les polysiloxanes, les organosiloxanes, les fluorosiloxanes, les fluorocarbures, les fluoropolymères, les fluorosilanes et leur mélange.

11. Plaque vitrocéramique (100) selon l'une quelconque des revendications 1 à 10, telle que les zones hydrophiles (303, 401-402, 506, 505) sont constituées par la surface de la plaque vitrocéramique n'ayant subi aucun traitement de surface.

12. Plaque vitrocéramique selon l'une quelconque des revendications 1 à 11, telle que les zones hydrophiles (303, 401-402, 506, 505) comprennent un ou plusieurs revêtements hydrophiles déposés sur une ou plusieurs régions de la surface de la plaque vitrocéramique.

13. Procédé de fabrication d'une plaque vitrocéramique (100) selon l'une quelconque des revendications 1 à 12, dans lequel les sous-cordons hydrophobes (103a-b, 201a-c, 501a-b, 502a-b) sont déposés selon l'une ou plusieurs des méthodes choisies parmi le dépôt chimique en phase liquide, le dépôt chimique en phase gazeuse, le dépôt chimique sous vide, telles que le spray, la sérigraphie, l'enduction centrifuge, l'enduction par trempage, le dépôt par impression à jet, le chiffonnage (wiping), la flexographie, la pulvérisation cathodique magnétron, le dépôt par impression tridimensionnelle

14. Dispositif de cuisson (600) comprenant une plaque vitrocéramique (100) selon l'une quelconque des revendications 1 à 12.

15. Dispositif de cuisson (600) selon la revendication 14 comprenant en outre une unité de commande (602), tel que l'unité de commande (602) n'est pas comprise dans la ou les régions (104, 503, 504) de la plaque vitrocéramique (100) délimitées par le cordon de rétention (103, 201, 501, 502).

## Patentansprüche

1. Glaskeramikkochfeld (100) für eine Vorrichtung zum Kochen, umfassend:
- eine erste Hauptfläche (101), die geeignet ist, mit Flüssigkeiten in Kontakt zu stehen, wenn das Kochfeld in Verwendung ist, eine zweite Hauptfläche (302) und eine Kante (301),
- ein Flüssigkeitsrückhalteband (103, 201, 501, 502), das auf der ersten Hauptfläche (101) befestigt ist und mit dieser in Kontakt steht,
wobei das Rückhalteband (103, 201, 501, 502):
- mindestens eine Region (104, 503, 504) der ersten Hauptfläche umgibt, um ein Flüssigkeitsrückhaltereservoir auszubilden, und
- mindestens zwei hydrophobe Teilbänder (103a-b, 201a-c, 501a-b, 502ab), die miteinander verbunden und durch hydrophile Bereiche (303, 401-402, 506, 505) getrennt sind, umfasst, wobei das Rückhalteband (103, 201, 501, 502) **dadurch gekennzeichnet ist, dass** die Breite des hydrophilen Bereichs zwischen zwei aufeinanderfolgenden Teilbändern überall zwischen 500 µm und 2,5 cm liegt,
und dadurch, dass die hydrophoben Teilbänder (103a-b, 201a-c, 501a-b, 502a-b) derart sind, dass wenn sie mit Wasser in Kontakt stehen, die Hysterese H des Kontaktwinkels zwischen den hydrophoben Teilbändern und dem Wasser größer als oder gleich 20° ist, wobei die Hysterese H des Kontaktwinkels als Differenz zwischen dem Vorschubwinkel θa und dem Rückzugswinkel θr des Wassers auf den hydrophoben Teilbändern (103a-b, 201a-c, 501a-b, 502a-b) definiert ist.

2. Glaskeramikkochfeld (100) nach Anspruch 1, wobei der Vorschubwinkel zwischen 108 und 120°, insbesondere zwischen 110° und 120° liegt.

3. Glaskeramikkochfeld (100) nach Anspruch 1 oder 2, wobei, die Breite der hydrophoben Teilbänder (103a-b, 201a-c, 501a-b, 502a-b) zwischen 5 mm und 20 mm, insbesondere zwischen 7 mm und 18 mm, sogar zwischen 10 mm und 15 mm liegt.

4. Glaskeramikkochfeld (100) nach einem der Ansprüche 1 bis 3, wobei der Wert des Rauheitsparameters, Ra, der hydrophoben Teilbänder (103a-b, 201a-c, 501a-b, 502a-b) zwischen 1 und 10 µm, vorzugsweise zwischen 2 und 5 µm liegt.

5. Glaskeramikkochfeld (100) nach einem der Ansprüche 1 bis 4, wobei der Wert des Spitzen-Tal-Parameters, Rz, der hydrophoben Teilbänder (103a-b, 201a-c, 501a-b, 502a-b) zwischen 5 und 50 µm, vorzugsweise zwischen 10 und 20 µm liegt.

6. Glaskeramikkochfeld (100) nach einem der Ansprüche 1 bis 5, wobei die Breite des Rückhaltebands (103, 201, 501, 502) zwischen 2 cm und 6 cm, insbesondere zwischen 3 und 6 cm, sogar zwischen 3 und 5 cm liegt.

7. Glaskeramikkochfeld (100) nach einem der Ansprüche 1 bis 6, wobei das Rückhalteband (103, 201, 501, 502) höchstens 3 cm, insbesondere höchstens 2 cm, sogar höchstens 1 cm von der Kante des Glaskeramikkochfelds angeordnet ist.

8. Glaskeramikkochfeld (100) nach einem der Ansprüche 1 bis 7, wobei die Oberflächenausdehnung der Region (104, 503, 504) des Glaskeramikkochfelds, die durch mindestens ein Rückhalteband (103, 201, 501, 502) umgeben ist, mindestens 60 %, insbesondere 70 %, vorzugsweise 80 %, sogar 90 % der Oberflächenausdehnung der Hauptfläche (101) des Glaskeramikkochfelds darstellt.

9. Glaskeramikkochfeld (100) nach einem der Ansprüche 1 bis 8, wobei die hydrophoben Teilbänder (103a-b, 201a-c, 501a-b, 502a-b) eine oder mehrere organische oder anorganische Verbindungen umfassen, wobei die Oberflächenspannung höchstens 20 mN.m⁻¹, insbesondere höchstens 15 mN.m⁻¹, sogar höchstens 10 mN.m⁻¹ beträgt.

10. Glaskeramikkochfeld (100) nach einem der Ansprüche 1 bis 9, wobei die hydrophoben Teilbänder eine oder mehrere organische Verbindungen umfassen, die aus Polysiloxanen, Organosiloxanen, Fluorsiloxanen, Fluorkohlenwasserstoffen, Fluorpolymeren, Fluorsilanen und deren Mischung ausgewählt sind.

11. Glaskeramikkochfeld (100) nach einem der Ansprüche 1 bis 10, wobei die hydrophilen Bereiche (303, 401-402, 506, 505) aus der Oberfläche des Glaskeramikkochfelds bestehen, die keiner Oberflächenbehandlung unterzogen wurde.

12. Glaskeramikkochfeld nach einem der Ansprüche 1 bis 11, wobei die hydrophilen Bereiche (303, 401-402, 506, 505) eine oder mehrere hydrophile Beschichtungen umfassen, die auf einer oder mehreren Regionen der Oberfläche des Glaskeramikkochfelds abgeschieden sind.

13. Verfahren zum Herstellen eines Glaskeramikkochfelds (100) nach einem der Ansprüche 1 bis 12, wobei die hydrophoben Teilbänder (103a-b, 201a-c, 501a-b, 502a-b) gemäß einem oder mehreren Verfahren, ausgewählt aus chemischer Abscheidung in der Flüssigphase, chemischer Abscheidung in der Gasphase, chemischer Abscheidung im Vakuum, wie Sprühen, Siebdruck, Rotationsbeschichtung, Tauchbeschichtung, Strahldruckabscheidung, Wischen (wiping), Flexografie, Magnetronsputtern, dreidimensionale Druckabscheidung abgeschieden werden

14. Vorrichtung zum Kochen (600), umfassend ein Glaskeramikkochfeld (100) nach einem der Ansprüche 1 bis 12.

15. Vorrichtung zum Kochen (600) nach Anspruch 14, ferner umfassend eine Steuereinheit (602), wobei die Steuereinheit (602) nicht in der/den Region(en) (104, 503, 504) des Glaskeramikkochfelds (100) umfasst ist, die durch das Rückhalteband (103, 201, 501, 502) begrenzt ist/sind.

## Claims

1. A glass-ceramic plate (100) for a cooking device comprising:
- a first main face (101) liable to be in contact with liquids when the plate is in the process of being used, a second main face (302) and an edge (301),
- a liquid-retaining bead (103, 201, 501, 502) fastened to and in contact with said first main face (101),
**characterized in that** said retaining bead (103, 201, 501, 502):
- surrounds at least one region (104, 503, 504) of said first main face so as to form a liquid-retaining reservoir, and
- comprises at least two hydrophobic sub-beads (103a-b, 201a-c, 501a-b, 502a-b) inscribed within one another and separated by hydrophilic zones (303, 401-402, 506, 505), the width of the hydrophilic zone between two consecutive sub-beads is throughout comprised between 500 µm and 2.5 cm. the hydrophobic sub-beads (103a-b, 201a-c, 501a-b, 502a-b) being such that when they are in contact with water, the hysteresis H of the contact angle between said hydrophobic sub-beads and the water is greater than or equal to 20°, said hysteresis H of the contact angle being defined as the difference between the advancing angle θa and the receding angle θr of the water on said hydrophobic sub-beads (103a-b, 201a-c, 501a-b, 502a-b).

2. The glass-ceramic plate (100) as claimed in claim 1, such that said advancing angle is between 108 and 120°, in particular between 110° and 120°.

3. The glass-ceramic plate (100) as claimed in claim 1 or 2, such that the width of the hydrophobic sub-beads (103a-b, 201a-c, 501a-b, 502a-b) is between 5 mm and 20 mm, in particular between 7 mm and 18 mm, or even between 10 mm and 15 mm.

4. The glass-ceramic plate (100) as claimed in any one of claims 1 to 3, such that the value of the roughness parameter, Ra, of the hydrophobic sub-beads (103a-b, 201a-c, 501a-b, 502a-b) is between 1 and 10 µm, preferably between 2 and 5 µm.

5. The glass-ceramic plate (100) as claimed in any one of claims 1 to 4, such that the value of the peak-to-valley parameter, Rz, of the hydrophobic sub-beads (103a-b, 201a-c, 501a-b, 502a-b) is between 5 and 50 µm, preferably between 10 and 20 µm.

6. The glass-ceramic plate (100) as claimed in any one of claims 1 to 5, such that the width of the retaining bead (103, 201, 501, 502) is between 2 cm and 6 cm, in particular between 3 and 6 cm, or even between 3 and 5 cm.

7. The glass-ceramic plate (100) as claimed in any one of claims 1 to 6, such that the retaining bead (103, 201, 501, 502) is placed at at most 3 cm, in particular at most 2 cm, or even at most 1 cm from the edge of said glass-ceramic plate.

8. The glass-ceramic plate (100) as claimed in any one of claims 1 to 7, such that the surface area of the region (104, 503, 504) of the glass-ceramic plate surrounded by at least one retaining bead (103, 201, 501, 502) represents at least 60%, in particular 70%, preferably 80%, or even 90% of the surface area of the main face (101) of the glass-ceramic plate.

9. The glass-ceramic plate (100) as claimed in any one of claims 1 to 8, such that the hydrophobic sub-beads (103a-b, 201a-c, 501a-b, 502a-b) comprise one or more organic or inorganic compounds, the surface tension of which is at most 20 mN.m⁻¹, in particular at most 15 mN.m⁻¹, or even at most 10 mN.m⁻¹.

10. The glass-ceramic plate (100) as claimed in any one of claims 1 to 9, such that the hydrophobic sub-beads comprise one or more organic compounds chosen from polysiloxanes, organosiloxanes, fluorosiloxanes, fluorocarbons, fluoropolymers, fluorosilanes and a mixture thereof.

11. The glass-ceramic plate (100) as claimed in any one of claims 1 to 10, such that the hydrophilic zones (303, 401-402, 506, 505) are formed by the surface of the glass-ceramic plate that has not undergone any surface treatment.

12. The glass-ceramic plate (100) as claimed in any one of claims 1 to 11, such that the hydrophilic zones (303, 401-402, 506, 505) comprise one or more hydrophilic coatings deposited on one or more regions of the surface of the glass-ceramic plate.

13. A process for manufacturing a glass-ceramic plate (100) as claimed in any one of claims 1 to 12, wherein the hydrophobic sub-beads (103a-b, 201a-c, 501a-b, 502a-b) are deposited according to one or more of the methods chosen from chemical liquid deposition, chemical vapor deposition, vacuum chemical deposition, such as spraying, screen printing, centrifugal coating, dip coating, inkjet printing deposition, wiping, flexography, magnetron sputtering, 3D printing deposition.

14. A cooking device (600) comprising a glass-ceramic plate (100) as claimed in any one of claims 1 to 12.

15. The cooking device (600) as claimed in claim 14, further comprising a control unit (602), such that the control unit (602) is not within the region(s) (104, 503, 504) of the glass-ceramic plate (100) defined by the retaining bead (103, 201, 501, 502).
